# FASCICULE DE BREVET EUROPEEN

(11) **EP 1 594 918 B1**
(45) Date de publication et mention de la délivrance du brevet: **11.04.2012**
(21) Numéro de dépôt: 04711380.8
(22) Date de dépôt: 16.02.2004
(51) Int. Cl.: C08L 23/04, C08J 9/00, C08L 23/16

(54) **MOUSSE DE POLYOLEFINES ULTRA-FLEXIBLE CONTENANT DU POLYETHYLENE METALLOCENE**
ULTRAFLEXIBLER POLYOLEFINSCHAUMSTOFF MITMETALLOCEN-POLYETHYLEN
ULTRAFLEXIBLE POLYOLEFIN FOAM CONTAINING POLYETHYLENE METALLOCENE

(30) Priorité: 20.02.2003 EP 03100410
(43) Date de publication de la demande: 16.11.2005
(73) Titulaire: NMC S.A., 4731 Raeren/Eynatten (BE)
(72) Inventeur: JOB, Denis, B-4031 Angleur (BE); MAYERES, Jean-Pierre, B-4700 EUPEN (BE)
(74) Mandataire: Office Freylinger
(86) Numéro de dépôt international: PCT/EP2004/050143
(87) Numéro de publication internationale: WO 2004/074369

(56) Documents cités:
- EP-A- 0 472 512
- WO-A-02/08332
- US-A1- 2001 027 221
- US-B1- 6 395 791

## Description

La présente invention concerne des mousses de polyoléfines ultraflexibles.

Ce type de mousse peut trouver son utilité en tant que comme joint d'étanchéité entre deux matériaux dont les surfaces sont irrégulières.

Dans des projets d'étanchéification, on souhaite disposer d'un matériau pouvant constituer une barrière à l'humidité. Ce matériau doit pouvoir être disponible sous forme de profil en continu, de forme variable, et doit posséder une bonne flexibilité ainsi qu'une excellente imperméabilité à l'eau. Si on dispose d'un tel matériau, le fait qu'il soit moussé apporte des avantages en terme de prix et de flexibilité. D'une manière générale, le matériau moussé sera placé (par collage ou soudage) sur une surface rigide, aux formes pouvant être irrégulières, et on viendra presser sur la surface sur laquelle le joint a été appliqué un substrat, écrasant partiellement le joint, afin de réaliser un cloisonnage étanche. Il peut s'agir, par exemple, de panneaux constitutifs d'un toit ou de murs. Si la pose doit pouvoir se faire manuellement, la force que l'on est capable d'exercer sur le joint de mousse est limitée. Si le joint est trop rigide, la force nécessaire pour l'écraser d'une manière régulière entre la surface et le substrat apposé par la suite sera insurmontable.

Les joints en mousse à cellules ouvertes très flexibles connus et qui sont adaptés à l'utilisation décrite plus haut sont généralement de nature composite: il s'agit par exemple de mousse à cellules ouvertes ayant une porosité accessible en surface, donc sans peau extérieure, très flexibles, en polyuréthane, polyester ou polyéther, et qui contiennent un liquide de forte viscosité rendant plus difficile le passage de l'humidité. Le joint est livré sous précontrainte dans une gaine en matière plastique, qui est retirée au moment de l'application. Le coût de ces joints composites est élevé, de par la nature des polymères employés pour la mousse, par l'emploi d'un liquide spécifique pour l'imperméabilisation et à cause du conditionnement du joint.

Une solution technique à ce problème est proposée par l'utilisation de joints en matériaux moussés possédant des cellules ouvertes et comportant une peau imperméable. De telles mousses, obtenues par un procédé d'extrusion en continu, sont décrites dans le brevet EP 405103 respectivement dans le brevet US 4,931,484. Elles sont constituées de polyéthylène homopolymère, de copolymères souples de polyéthylène ou de leurs mélanges. Parmi les homopolymères, le polyéthylène basse densité est préféré; parmi les copolymères éthyléniques souples, on mentionne l'EVA, l'EMA, l'EEA, l'EAA. L'EVA constitue le copolymère souple éthylénique préféré. La structure bimodale des cellules (ouvertes ou fermées) est obtenue en extrudant les compositions au moins à 5°C au-dessus de la température donnant lieu à une mousse à cellules majoritairement fermées. Les mousses ainsi obtenues présentent des propriétés mécaniques exprimées sous forme de limite supérieure de compressibilité, à savoir 68947 N/m² ou moins à 50% de déformation, selon un projet de norme ASTM « Specification for Backer Material for Use With Cold and Hot applied Joint Sealants Used with Portland Cement Concrete and Asphalt Pavement Joints ». Les exemples cités dans ces références décrivent des mousses caractérisées par une compression de minimum 19994.6 N/m² à 50% de déformation. La structure cellulaire est qualifiée soit de taille « moyenne », soit « fine mais avec quelques grosses cellules présentes au coeur ».

Cependant, les mousses décrites dans les brevets EP 405103, ou US 4931484, ne possèdent pas la souplesse nécessaire pour les applications où une pression raisonnable doit pouvoir être exercée sans l'aide de machines ou de ressources humaines importantes, pour comprimer la mousse entre deux parois, par exemple dans les situations de placement manuel décrites précédemment.

Le document WO02/08332 concerne une composition de polymère expansible comprenant: a1) un copolymère sensiblement statistique produit à partir de : i) un ou plusieurs monomères d'α-oléfine, et ii) un ou plusieurs monomères aromatiques de vinyle ou de vinylidène et/ou un ou plusieurs monomères de vinyle ou de vinylidène aliphatiques ou cycloaliphatiques à encombrement stérique, et éventuellement iii) un ou plusieurs autres monomères polymérisables insaturés en éthylène ; ou a2) un copolymère comprenant des unités polymérisées d'éthylène et d'acétate de vinyle, ou a3) une combinaison des polymères a1) et a2); et b) un polydiorganosiloxane présentant une viscosité d'au moins un million de centistokes à 25 °C; et c) un agent moussant. Le polydiorganosiloxane est utile pour améliorer la résistance à l'abrasion de mousses contenant le copolymère a1) sensiblement statistique et/ou le copolymère a2) éthylène/acétate de vinyle.

Le document EP 0472512 décrit une composition thermoplastique vulcanisée dynamiquement, présentant une adhérence améliorée avec le PVC. Les compositions décrites comprennent a) une résine oléfinique thermoplastique, tel qu'un copolymère non-élastomérique de l'éthylène et d'acétate de vinyle ; b) un copolymère élastomérique d'éthylène et d'acétate de vinyle ; et c) un copolymère élastomérique, tel qu'un caoutchouc halogénobutyle, EPDM, ou un copolymère d'une isomono-oléfine et d'un para-alkylstyrène, un polyéthylène halogéné pouvant également être incorporé dans la composition.

Le but de la présente invention est de réaliser des mousses qui sont bien plus flexibles que celles de l'état de l'art.

Ce but est atteint par une mousse comprenant un mélange de:
a) 5 à 85% d'un copolymère souple d'éthylène fabriqué par un procédé à haute pression choisi parmi le groupe constitué de l'éthylène acrylate d'éthyle (EEA), l'éthylène acide acrylique (EAA), l'éthylène acide méthacrylique (EMAA), l'éthylène acétate de vinyle (EVA), l'éthylène acrylate de butyle (EBA), l'éthylène acrylate de méthyle (EMA); ou de leurs mélanges
b) 5 à 85% ou d'un copolymère souple d'éthylène fabriqué par un procédé à haute pression choisi parmi le groupe constitué de l'éthylène acrylate d'éthyle (EEA), l'éthylène acide acrylique (EAA), l'éthylène acide méthacrylique (EMAA), l'éthylène acétate de vinyle (EVA), l'éthylène acrylate de butyle (EBA), l'éthylène acrylate de méthyle (EMA), distinct(s) de celui (ceux) désigné(s) au point a) en ce qu'il(s) doit (doivent) avoir un point de fusion DSC inférieur d'au minimum 5°C à celui du (des) polymère(s) du point a),
c) de 5 et 50 % de polyéthylène métallocène.

Les copolymères souples de l'éthylène fabriqués par un procédé à haute pression sont tous ceux synthétisés sous haute pression, par exemple de l'éthylène acrylate d'éthyle (EEA), éthylène acide acrylique (EAA), éthylène acide méthacrylique (EMAA), éthylène acétate de vinyle (EVA), éthylène acrylate de butyle (EBA), éthylène acrylate de méthyle (EMA). Le Melt Flow Index de ces copolymères peut varier de 0.2 à 25, préférentiellement de 0.7 à 8. L'EVA, l'EBA, l'EMA sont préférentiellement utilisés. Si en outre une résistance en température supérieure est recherchée, on peut partir d'un homopolymère et/ou d'un copolymère éthylènique modifiés par greffage au silane, en combinaison avec un catalyseur pour la réticulation ultérieure de la mousse finale avec l'humidité de l'air ou l'immersion temporaire dans l'eau.

Un des avantages de ces mousses est qu'elles comprennent des matières moins onéreuses que les mousses composites sans peau externe actuellement disponibles. Les mousses selon l'invention possèdent naturellement une peau externe imperméable à l'eau.

Il a été trouvé, de manière inattendue, qu'en ajoutant du polyéthylène métallocène à des compositions comprenant a) un copolymère souple d'éthylène comme par exemple l'EVA, l'EMA, l'EBA, l'EEA, l'EAA et assimilés et b) un polymère distinct de ceux désignés au point a) en ce qu'il doit avoir un point de fusion DSC inférieur d'au minimum 5°C (de préférence 10°C) à celui du copolymère du point a), on obtient une nouvelle sorte de mousse à cellules ouvertes possédant une souplesse inégalée, aidée en cela par une structure cellulaire particulièrement fine et régulière par rapport à l'état de l'art.

Les valeurs de compression sont divisées au moins par deux par rapport à celles obtenues avec des mousses représentatives des précédents brevets EP 405103, respectivement US 4931484.

Bien que mentionnant l'utilisation de « copolymères souples d'éthylène », les précédents brevets EP 405103, respectivement US 4931484, ne suggèrent pas l'utilisation concomitante du polyéthylène métallocène. En effet, les copolymères souples cités dans les précédentes références sont des copolymères issus de la polymérisation en procédé haute pression radicalaire de monomère éthylène et de co-monomères variés (par exemple l'acétate de vinyle, l'acétate d'éthyle, l'acrylate de butyle, l'acide acrylique), donnant lieu à des chaînes principales ayant de nombreuses branches de type long. Cette morphologie est très favorable au moussage par gazage direct, car l'existence des longues branches entraîne un phénomène de durcissement élongationnel aux hautes déformations, ce qui améliore grandement la tenue à l'état fondu du polymère (le « Melt Strength »), et par la même occasion sa moussabilité (possibilité d'atteindre des basses densités). Or les polyéthylènes métallocènes sont obtenus par un procédé catalytique.et comportent peu ou pas de branchement de type long.

Les polyéthylènes métallocènes qui peuvent être utilisés ont une densité comprise entre 860 kg/m³ et 915 kg/m³, ce qui leur confère des propriétés élastomèriques (allongement à la rupture particulièrement élevé, supérieur à celui des copolymères de l'éthylène de type radicalaire). Les co-monomères possibles sont le butène C₄, l'hexène C₆, l'octène C₈. La quantité et la répartition du co-monomère agissent sur la densité du polyéthylène métallocène et sur les propriétés thermo-mécaniques. Les polyéthylènes métallocènes EXACT (EXXONMOBIL, co-monomère C₄, C₆ ou C₈), ENGAGE (Dupont Dow, co-monomère C₈) peuvent être utilisés.

Par rapport aux copolymères radicalaires de l'éthylène fabriqué selon un procédé de haute pression (procédé radicalaire) (EVA, EBA, EMA, EAA,...), les polyéthylènes métallocènes de densité inférieure ou égale à 915 kg/m³ possèdent des caractéristiques mécaniques avantageuses, notamment une souplesse supérieure. Comme les exemples le montrent, les mousses fabriquées requièrent une contrainte de compression très faible.

D'une manière plus avantageuse, on utilisera de 15 à 50% de polyéthylène métallocène.

Le polyéthylène métallocène aura de préférence une densité inférieure ou égale à 915 kg/m³.

Selon un mode de réalisation particulièrement préféré, le mélange comprendra de 30 à 45 % de polyéthylène métallocène ayant une densité inférieure ou égale à 915 kg/m³.

Selon un mode de réalisation préféré, le mélange peut comprendre en outre de 5 à 85% de polyéthylène chloré possédant un taux de chlore allant de 10 à 60%. en poids.

Par rapport aux copolymères radicalaires de l'éthylène fabriqué selon un procédé de haute pression (procédé radicalaire) (EVA, EBA, EMA, EAA....), les CPE ne bénéficient pas de longues branches latérales, car ils sont synthétisés à partir de HDPE, ayant une structure fortement linéaire et exempte de branchement de type long. Le HDPE est traité avec du chlore dans un procédé en suspension, au cours duquel on ajoute des nucléateurs de croissance et des agents anti-mottant: talc, carbonate de calcium, stéarate de calcium. Le CPE est délivré sous forme de poudre qui ne se compacte pas grâce aux agents anti-mottant Les taux de chlore peuvent aller de 10 à 60% selon les applications.

Pour expliquer les résultats surprenant obtenus, et ce malgré la structure des chaînes non branchées du CPE, on peut proposer l'explication suivante: la combinaison du polyéthylène chloré avec des polymères branchés de type homopolymère ou copolymères basés sur l'éthylène, est rendue possible par la compatibilisation due à la présence de groupements éthylène dans le CPE. La moussabilité du CPE est ainsi supportée, et la flexibilité du CPE, résultant du chlore introduit de manière principalement atactique, améliore grandement la souplesse de la mousse. Enfin, la finesse et la régularité exceptionnelles des cellules obtenues améliorent encore les qualités mécaniques. Sur ce dernier point, il semblerait que les additifs incorporés au cours de la chloration du HDPE étant idéalement dispersés et compatibilisés dans ce procédé unique de fabrication, ils confèrent au CPE ce pouvoir nucléant particulier lors du moussage, permettant l'obtention de cellules très fines et régulières, ce que ne permet pas de manière aisée l'usage de nucléants apportés à posteriori à des compositions exemptes de CPE.

La mousse comprend avantageusement entre 10 à 50% de polyéthylène chloré et de préférence entre 20 à 40% de polyéthylène chloré.

Le polyéthylène chloré (CPE) aura avantageusement entre 10 et 50 % de chlore, de manière préférée de 20 à 40% de chlore, ou de manière particulièrement préférée de 30 à 36% de chlore. La viscosité (DIN 54811-A/ISO/DIS 11443, 145s⁻¹, 190°C) du CPE peut varier de 500 Pa.s à 2500 Pa.s, préférentiellement on choisira une viscosité de 700 Pa. S à 1500 Pa.s.

Pour régulariser d'avantage la structure cellulaire, on peut employer des agents nucléants. Cependant, l'utilisation de nucléants « passifs », comme par exemple le talc, le carbonate de calcium, la silice ou le stéarate de calcium, ne donnent pas - dans certaines conditions - une structure cellulaire suffisamment homogène: il subsiste parfois des cellules exagérément grosses au coeur de la mousse, là où le flux est le plus chaud, ce qui favorise le phénomène de coalescence. Par contre, il a été trouvé que l'utilisation d'agents nucléants « actifs », comme les combinaisons de bicarbonate de soude et/ou d'acide citrique disponibles sur le marché (« HYDROCEROL » de CLARIANT, « SAFOAM » de REEDY, « TRACEL » de TRAMACO,... et apparentés), qui libèrent du gaz en se décomposant sous l'action de la température lors de la mise en oeuvre, permet de minimiser encore d'avantage ce phénomène et d'obtenir une structure cellulaire particulièrement fine et régulière sur toute la section de la mousse. Ces agents « actifs » sont disponibles sous forme de mélanges maîtres (masterbatch), sur base de la résine adéquate (polyéthylène, copolymère d'éthylène, polyéthylène métallocène,...). De préférence, on utilise conjointement les agents nucléants « passifs » comme ceux précités et,des agents nucléants « actifs » pour optimiser la structure cellulaire et le coût de la formulation, les agents nucléants « actifs » étant généralement plus chers que les agents nucléants « passifs ». Le dosage de ces nucléants sera adapté selon la structure cellulaire désirée. On utilisera généralement de 0,1 à à 10% en poids d'agents nucléants actifs, incluant ou non les nucléants passifs précédemment définis.

D'autres additifs peuvent être employés afin d'atteindre des propriétés particulières pour la mousse. On peut citer, entre autres, les anti-feu, agents antistatiques, agents stabilisateurs de volume, pigments, absorbeurs-réflecteurs d'infrarouges, anti-UV, antioxydants,...qui sont connus de l'homme de l'art.

On peut également adjoindre des agents améliorant la processabilité : fluoroélastomères, cires de polyoléfines, cires oxydées de polyoléfines,....

Les gaz utilisables pour le moussage en gazage direct sont connus de l'homme de l'art, il s'agit de manière générale de composés organiques volatiles, ayant un point d'ébullition (à 1 atmosphère) inférieur au point de fusion de la résine de base. Par exemple, les hydrocarbures alcanes, les HFC, le CO₂, les gaz de l'atmosphére (CO₂, N₂, Ar ,...). Parmi ces produits, les alcanes sont les agents gonflant physiques préférés, spécialement les alcanes en C₃ et C₄. Plus particulièrement , l'isobutane est employé.

L'invention concerne également un procédé de fabrication de la mousse de l'invention en extrusion par injection directe de gaz. Ce procédé comprend les étapes suivantes:
a) dosage des constituants, prémélangés ou dosés individuellement, à l'alimentation d'une extrudeuse;
b) plastification du mélange par chauffage à haute température du cylindre et mélange par la vis pour fondre entièrement la masse et l'homogénéiser;
c) injection dans le cylindre d'un gaz de moussage à l'endroit où la viscosité du mélange est la plus appropriée;
d) homogénéisation de la masse + gaz;
e) refroidissement de la masse: dernières zones du cylindre plus froides, section de refroidissement statique, homogénéisation;
f) extrusion à travers une filière, contrôlée en température, ayant une section de forme prédéfinie selon l'application finale de la mousse, la masse subissant une chute importante de pression qui entraîne la formation des bulles de gaz, provoquant la formation de la mousse à l'air libre;
g) refroidissement, étirage et guidage de la mousse.

Au cours de l'étape g), la mousse peut éventuellement être pincée.

La mousse extrudée est guidée, par une étireuse pratiquement sans tension, dans une section de refroidissement (air ou eau ou les deux) pour figer la structure désirée.

L'extrudeuse peut être une extrudeuse à simple vis, double vis co-rotative ou contre-rotative.

La température d'extrusion du mélange en filière sera adaptée par l'homme de l'art afin d'obtenir la consistance requise du produit moussé. Cela signifie qu'il faut obtenir une température à la filière plus élevée que la température qui mènerait à la formation de cellules fermées. Le mélange de polymères ayant des points de fusion différents, cela favorise l'obtention de cellules majoritairement ouvertes au sein de la mousse, à une température plus élevée. Cependant, il est conseillé de réaliser une trempe de la surface de la mousse immédiatement après sa sortie de la filière à l'air libre, ceci afin de constituer une couche périmétrique de cellules fermées. Cela permet d'éviter l'effondrement de la masse moussée, qui est plus faible mécaniquement vu la température d'extrusion volontairement plus élevée que pour l'obtention de mousses à cellules majoritairement fermées.

Il est possible de fabriquer des mousses à partir des compositions de la présente invention de formes multiples: profilés ronds, carrés, formes irrégulières concaves ou convexes,.... Il suffit d'extruder le mélange polymères + gaz à travers une filière ayant le design et la forme requis pour donner la forme finale expansée désirée.

Pour des formes creuses, on utilisera un pointeau et une filière afin de réaliser le corps creux, le mélange polymère + gaz contournant le pointeau à l'état fondu, pour se solidifier une fois à l'air libre en se refroidissant.

Toutefois, on a constaté que dans le cas de profils creux et en particulier pour des tubes ronds, les compositions de la présente invention donnent lieu à des mousses tellement souples qu'une fois le tube de mousse formé, il s'effondre sous son propre poids. En diminuant la température de la masse polymère + gaz à la sortie du cylindre, on peut rétablir la rotondité du tube mais les cellules sont alors nettement plus fermées, et l'on perd le bénéfice de ces compositions. Il a été trouvé que, de manière inattendue, en pinçant judicieusement le tube de mousse à l'endroit adéquat de son refroidissement, le tube se stabilise et redevient parfaitement rond. Une explication est proposée, à savoir que le fait d'emprisonner de l'air dans l'intérieur du tube, combiné à la diffusion de l'agent de moussage, maintient une surpression hydrostatique qui s'équilibre en rétablissant la forme naturelle du tube. Une fois la mousse convenablement refroidie, on peut relâcher le pincement et le tube se forme parfaitement.

Les exemples suivants illustrent clairement les propriétés avantageuses des mousses obtenues avec les compositions de la présente invention, par rapport à des mousses ayant des compositions représentatives de l'état de la technique.

### EXEMPLE 1 COMPARATIF:

Une première mousse représentative de l'état de la technique mentionné est obtenue en extrudant le mélange comportant:
➢ 70 parts en poids de LDPE (densité 929 kg/m³, MFI=8);
➢ 30 parts en poids de résine EVA (MFI=2 g/10min., 18% Vinyl acétate);
➢ 2.2 parts en poids d'un masterbatch antistatiques à 70% de glycerol monostearate ATMER 122 (ICI) dans 30% d'EVA;
➢ 2 parts en poids d'un masterbatch à 25% de talc dans du LDPE;
➢ 0.2 parts en poids de masterbatch de couleur noire.

La mousse est extrudée à travers une filière rectangulaire, à 10kg/h de débit de polymères, avec 1.05 kg d'isobutane /h. La température de la masse polymère + gaz à la sortie du cylindre est de 113°C et la mousse passe dans un anneau soufflant de l'air , placé directement après la formation de la mousse à l'air libre, pour figer la surface extérieure de la mousse. La densité est de 27 kg/m³ et le profil est un rectangle de 14x9mm, comptant ± 250 cellules/cm². Il y a des cellules plus grosses localisées au centre de la mousse. La mousse est à cellules ouvertes avec une peau extérieure et présente une certaine souplesse.

### EXEMPLE 2 COMPARATIF:

Une autre mousse représentative de l'état de la technique mentionné est préparée avec la composition suivante:
➢ 35 parts en poids de résine EBA (MFI=1 g/10min., 7% butyl acrylate)
➢ 30 parts en poids de résine EVA (MFI=2 g/10min., 18% Vinyl acétate);
➢ 35 parts en poids de polyéthylène chloré TYRIN 3611P (DuPont Dow Elastomères Plaquemine (US), 36% chlore, viscosité 800 Pa.s)
➢ 2.2 parts en poids d'un masterbatch antistatiques à 70% de glycerol monostearate ATMER 122 (ICI) dans 30% d'EVA;
➢ 0.2 parts en poids de masterbatch de couleur noire.

La mousse est extrudée à travers la filière rectangulaire de l'exemple comparatif N°1, à 10kg/h de débit de polymères, avec 1.08 kg d'isobutane /h. La température de la masse polymère + gaz à la sortie du cylindre est de 101.1°C et la mousse passe dans un anneau soufflant de l'air, placé directement après la formation de la mousse à l'air libre, pour figer la surface extérieure de la mousse. La densité est de 29 kg/m³ et le profil est un rectangle de 13x8.2mm, comptant ± 600 cellules/cm². La mousse est à cellules ouvertes avec une peau extérieure et présente une souplesse supérieure à celle de d'exemple 1 comparatif, non seulement du fait de la taille cellulaire plus fine en moyenne, mais surtout grâce à l'incorporation du CPE et la substitution du polyéthylène LDPE par le copolymère EBA. Les cellules sont uniformes sur toute la section.

### EXEMPLE 3:

Une mousse de composition nouvelle illustrant l'invention est préparée avec la composition suivante:
➢ 35 parts en poids de résine EBA (MFI=1 g/10min., 7% butyl acrylate)
➢ 30 parts en poids de résine EVA (MFI=2 g/10min., 18% Vinyl acétate);
➢ 35 parts en poids de polyéthylène métallocène EXACT 8203 (DEXPLATOMERS, densité 882 kg/m³, MFI=3 g/10 min.)
➢ 2.2 parts en poids d'un masterbatch antistatiques à 70% de glycerol monostearate ATMER 122 (ICI) dans 30% d'EVA;
➢ 0.2 parts en poids de masterbatch de couleur noire.
➢ 2 parts de masterbatch contenant 25% en poids de talc, sur base de résine EVA
➢ 2 parts de masterbatch HYDROCEROL CF 20 P (CLARIANT), comportant 20% de mélange bicarbonate de soude-acide citrique dans 80% d'un copolymère d'éthylène.

La mousse est extrudée à travers la filière rectangulaire de l'exemple comparatif N°1, à 10kg/h de débit de polymères, avec 1.23 kg d'isobutane /h. La température à l'outil est de 91.3°C et la mousse passe dans un anneau soufflant de l'air, placé directement après la formation de la mousse à l'air libre, pour figer la surface extérieure de la mousse. La densité est de 25 kg/m³ et le profil est un rectangle de 13x12mm, comptant ± 550 cellules/cm². La mousse est à cellules ouvertes avec une peau extérieure, et cette fois la structure cellulaire est parfaitement homogène sur toute la section. Cette mousse présente une force de compression à 50% qui est ± 40% inférieure à celles de l'exemple comparatif N°2.

### EXEMPLE 4:

Une mousse de composition nouvelle illustrant l'invention est préparée avec la composition suivante:
➢ 25 parts en poids de résine EBA (MFI=1 g/10min., 7% butyl acrylate)
➢ 30 parts en poids de résine EVA (MFI=5 g/10min., 14% Vinyl acétate);
➢ 45 parts en poids de polyéthylène métallocène EXACT 0203 (DEXPLATOMERS, densité 902 kg/m³, MFI=3 g/10 min.)
➢ 2.2 parts en poids d'un masterbatch antistatiques à 70% de glycerol monostearate ATMER 122 (ICI) dans 30% d'EVA;
➢ 0.2 parts en poids de masterbatch de couleur noire.
➢ 2 parts de masterbatch contenant 25% en poids de talc, sur base de résine EVA
➢ 2 parts de masterbatch HYDROCEROL CF 20 P (CLARIANT), comportant 20% de mélange bicarbonate de soude-acide citrique dans 80% d'un copolymère d'éthylène.

La mousse est extrudée à travers la filière rectangulaire de l'exemple comparatif N°1, à 10kg/h de débit de polymères, avec 1.41 kg d'isobutane /h. La température à l'outil est de 104.2°C et la mousse passe dans un anneau soufflant de l'air, placé directement après la formation de la mousse à l'air libre, pour figer la surface extérieure de la mousse. La densité est de 25 kg/m³ et le profil est un rectangle de 13x12mm, comptant ± 550 cellules/cm². La mousse est à cellules ouvertes avec une peau extérieure, et cette fois la structure cellulaire est parfaitement homogène sur toute la section. Cette mousse présente une souplesse un peu moindre que celle de l'exemple 3, dû à l'emploi de polyéthylène métallocène plus dense, mais elle est cependant bien plus souple que les mousses des exemples comparatifs 1 et 2.

### EXEMPLE 5:

Une mousse de composition nouvelle illustrant l'invention est préparée avec la composition suivante:
➢ 25 parts en poids de résine EBA (MFI=1 g/10min., 7% butyl acrylate)
➢ 30 parts en poids de résine EVA (MFI=5 g/10min., 14% Vinyl acétate);
➢ 45 parts en poids de polyéthylène métallocène ENGAGE 8445 (Dupont-Dow Elastomers, densité 910 kg/m³, MFI=3.5 g/10 min.)
➢ 2.2 parts en poids d'un masterbatch antistatiques à 70% de glycerol monostearate ATMER 122 (ICI) dans 30% d'EVA;
➢ 0.2 parts en poids de masterbatch de couleur noire.
➢ 2 parts de masterbatch contenant 25% en poids de talc, sur base de résine EVA
➢ 2 parts de masterbatch HYDROCEROL CF 20 P (CLARIANT), comportant 20% de mélange bicarbonate de soude-acide citrique dans 80% d'un copolymère d'éthylène.

La mousse est extrudée à travers la filière rectangulaire de l'exemple comparatif N°1, à 10kg/h de débit de polymères, avec 1.41 kg d'isobutane /h. La température à l'outil est de 104.2°C et la mousse passe dans un anneau soufflant de l'air, placé directement après la formation de la mousse à l'air libre, pour figer la surface extérieure de la mousse. La densité est de 25 kg/m³ et le profil est un rectangle de 13x12mm, comptant ± 550 cellules/cm². La mousse est à cellules ouvertes avec une peau extérieure, et cette fois la structure cellulaire est parfaitement homogène sur toute la section. Cette mousse présente une souplesse un peu moindre que celle de l'exemple 3, dû à l'emploi de polyéthylène métallocène plus dense, mais elle est cependant bien plus souple que les mousses des exemples comparatifs 1 et 2.

### EXEMPLE 6:

Une mousse de composition nouvelle illustrant l'invention est préparée avec la composition suivante:
➢ 25 parts en poids de résine EBA (MFI=1 g/10min.. 7% butyl-acrylate)
➢ 30 parts en poids de résine EVA (MFI=2 g/10min., 18% Vinyl-acétate);
➢ 25 parts en poids de polyéthylène chloré TYRIN 3611P (DuPont Dow Elastomères Plaquemine (US), 36% chlore, viscosité 800 Pa.s);
➢ 20 parts en poids de polyéthylène métallocène EXACT 8203 (DEXPLASTOMERS, densité 882 kg/m³, MFI = 3 g/10min)
➢ 2.2 parts en poids d'un masterbatch antistatiques à 70% de glycérol monostéarate ATMER 122 (ICI) dans 30% d'EVA;
➢ 0.2 parts en poids de masterbatch de couleur noire.

La mousse est extrudée à travers la filière rectangulaire de l'exemple comparatif N°1, à 10kg/h de débit de polymères, avec 1.41 kg d'isobutane /h. La température de la masse polymère + gaz à la sortie du cylindre est de 98.8°C et la mousse passe dans un anneau soufflant de l'air, placé directement après la formation de la mousse à l'air libre, pour figer la surface extérieure de la mousse. La densité est de 25 kg/m³ et le profil est un rectangle de 15x13mm, comptant ± 600 cellules/cm². La mousse est à cellules ouvertes avec une peau extérieure et présente une souplesse étonnante. Les cellules sont remarquablement uniformes sur toute la section.

La force de compression (N/mm²) suivant ISO 3386/1 et /2 est, pour tous les exemples représentatifs de l'invention, très inférieure à celle nécessaire dans le cas des exemples comparatifs 1 et 2:

**Tableau 1: Valeur de compression (N/mm²) suivant ISO 3386/1 et /2:**

| Déformation imposée | 1 | 2 | 3 | 4 | 5 | 6 |
|---|---|---|---|---|---|---|
| 10% | 7643 | | 2667 | 1437 | 1917 | 1235 |
| 20% | 12259 | 8342 | 4750 | 2953 | 4053 | 2090 |
| 30% | 16161 | 11700 | 6583 | 4806 | 6132 | 2821 |
| 40% | 19545 | | 7792 | 6597 | 8376 | 3551 |
| 50% | 23866 | 19742 | 9458 | 8941 | 11118 | 4701 |
| 60% | 32304 | | 13375 | 12573 | 15708 | 6581 |

## Revendications

1. Mousse extrudée à cellules ouvertes comprenant un mélange de:
a) 5 à 85% d'un copolymère souple fabriqué par un procédé à haute pression choisi parmi le groupe constitué de l'éthylène acrylate d'éthyle (EEA), l'éthylène acide acrylique (EAA), l'éthylène acide méthacrylique (EMAA), l'éthylène acétate de vinyle (EVA), l'éthylène acrylate de butyle (EBA), l'éthylène acrylate de méthyle (EMA) ou de leurs mélanges ;
b) de 5 à 85% d'un copolymère souple d'éthylène fabriqué par un procédé à haute pression choisi parmi le groupe constitué de l'éthylène acrylate d'éthyle (EEA), l'éthylène acide acrylique (EAA), l'éthylène acide méthacrylique (EMAA), l'éthylène acétate de vinyle (EVA), l'éthylène acrylate de butyle (EBA), l'éthylène acrylate de méthyle (EMA) ou de leurs mélanges, distinct(s) de celui (ceux) désigné(s) au point a) en ce qu'il(s) doit (doivent) avoir un point de fusion DSC inférieur d'au minimum 5°C à celui du (des) polymère(s) du point a)
c) de 5 à 50 % de polyéthylène métallocène.

2. Mousse selon la revendication 1, **caractérisée en ce que** le point de fusion DSC entre le(s) polymère(s) sous b) est inférieur d'au minimum 10°C à celui du (des) polymère(s) du point a)

3. Mousse selon la revendication 1 ou 2, **caractérisée en ce qu'**elle comprend entre de 15 à 50% de polyéthylène métallocène.

4. Mousse selon l'une quelconque des revendications précédentes, **caractérisée en ce que** le polyéthylène métallocène a une densité inférieure à 915 kg/m³.

5. Mousse selon l'une quelconque des revendications précédentes, **caractérisée en ce que** qu'elle comprend en outre de 5 à 85% de polyéthylène chloré possédant un taux de chlore allant de 10 à 60%. en poids.

6. Mousse selon la revendication 5, **caractérisée en ce qu'**elle comprend de 10 à 50% de polyéthylène chloré et de préférence entre 20 à 40% de polyéthylène chloré.

7. Mousse selon l'une quelconque des revendications précédentes, **caractérisée en ce qu'**elle comprend entre 0.1 et 10% en poids d'agents nucléants,

8. Mousse selon l'une quelconque des revendications précédentes, **caractérisée en ce qu'**elle comprend en outre les additifs et adjuvants usuels, choisi dans le groupe constitué des agents de contrôle de stabilité dimensionnelle, des agents antistatiques, des pigments, des antioxydants, des antiUV, des lubrifiants, des agents antifeu, des pigments réflecteurs / absorbeurs d'infrarouges.

9. Joint d'étanchéité comprenant une mousse selon l'une quelconque des revendications précédentes.

10. Procédé de moussage du mélange de polymères selon l'une quelconque des revendications 1 à 8, **caractérisé en ce qu'**il comprend les étapes suivantes:
a) dosage des constituants, prémélangés ou dosés individuellement, à l'alimentation d'une extrudeuse;
b) plastification et mélange des constituants à haute température pour fondre et homogénéiser les constituants;
c) injection d'un gaz de moussage;
d) homogénéisation des constituants et du gaz;
e) refroidissement de la masse;
f) extrusion à l'air libre à travers une filière, contrôlée en température, ayant une section de forme prédéfinie, provoquant la formation de la mousse;
g) refroidissement, étirage et guidage de la mousse ainsi formée.

11. Procédé de moussage selon la revendication 10, **caractérisé en ce que** pendant l'étape g), la mousse est pincée.

## Claims

1. Extruded open cell foam comprising a mixture of:
a) 5 to 85% of a flexible ethylene copolymer manufactured by a high pressure process selected among the group consisting of ethylene/ethyl acrylate (EEA), ethylene/acrylic acid (EAA), ethylene/methacrylic acid (EMAA), ethylene/vinyl acetate (EVA), ethylene/butyl acrylate (EBA), ethylene/methyl acrylate (EMA); or their mixtures
b) 5 to 85% of a flexible ethylene copolymer manufactured by a high pressure process selected among the group consisting of ethylene/ethyl acrylate (EEA), ethylene/acrylic acid (EAA), ethylene/methacrylic acid (EMAA), ethylene/vinyl acetate (EVA), ethylene/butyl acrylate (EBA), ethylene/methyl acrylate (EMA), or their mixtures distinct from that (those) designated in point a) in that it (they) must have a DSC melting point of at least 5 °C below that of the polymer(s) of point a),
c) from 5 to 50 % of metallocene polyethylene.

2. Foam according to claim 1, **characterised in that** the DSC melting point between the polymer(s) under b) is at a minimum 10 °C below that of the polymer(s) of point a).

3. Foam according to claim 1 or 2 comprising between 15 and 50% of metallocene polyethylene.

4. Foam according to any one of the previous claims, **characterised in that** the density of the metallocene polyethylene is less than 915 kg/m³.

5. Foam according to any one of the previous claims additionally comprising from 5 to 85% of chlorinated polyethylene possessing a chlorine content going from 10 to 60% by weight.

6. Foam according to claim 5 comprising from 10 to 50% of chlorinated polyethylene and preferably between 20 to 40% of chlorinated polyethylene.

7. Foam according to any one of the previous claims additionally comprising between 0.1 and 10% by weight of nucleating agents.

8. Foam according to any one of the previous claims further comprising the usual additives and auxiliaries, selected from the group consisting of agents for controlling the dimensional stability, antistats, pigments, antioxidants, anti-UVs, lubricants, flame retardants, infra-red reflecting/absorbing pigments.

9. Sealing gasket comprising a foam according to any one of the previous claims.

10. Process for foaming a mixture of polymers according to one of the previous claims, said process comprising the following steps:
a) metering the constituents, premixed or individually, into the feed section of an extruder;
b) plasticising and mixing the constituents at high temperature so as to melt and homogenise the constituents;
c) injecting a foaming gas;
d) homogenising the constituents and the gas;
e) cooling the melt;
f) extruding into the open air through a temperature-controlled die having a predefined sectional shape, initiating the formation of the foam;
g) cooling, taking off and guiding the thus-formed foam.

11. Process for foaming according to claim 10, **characterised in that** during the step g), the foam is crimped.

## Patentansprüche

1. Extrudierter offenzelliger Schaumstoff, der ein Gemisch der folgenden umfasst:
a) 5 bis 85 % eines mit einem Hochdruckverfahren hergestellten weichen Copolymers, das aus der Gruppe bestehend aus Ethylenethylacrylat (EEA), Ethylenacrylsäure (EAA), Ethylenmethacrylsäure (EMAA), Ethylenvinylacetat (EVA), Ethylenbutylacrylat (EBA), Ethylenmethylacrylat (EMA) oder deren Gemischen ausgewählt ist;
b) 5 bis 85 % eines mit einem Hochdruckverfahren hergestellten weichen Ethylencopolymers, das aus der Gruppe bestehend aus Ethylenethylacrylat (EEA), Ethylenacrylsäure (EAA), Ethylenmethacrylsäure (EMAA), Ethylenvinylacetat (EVA), Ethylenbutylacrylat (EBA), Ethylenmethylacrylat (EMA) oder deren Gemischen ausgewählt ist, das (die) sich von dem (denen) in Punkt a) genannten dadurch unterscheidet (unterscheiden), dass es (sie) einen DSC-Schmelzpunkt haben muss (müssen), der mindestens 5 °C niedriger als der des Polymers (der Polymere) von Punkt a) ist;
c) 5 bis 50 % Metallocen-Polyethylen.

2. Schaumstoff nach Anspruch 1, **dadurch gekennzeichnet, dass** der DSC-Schmelzpunkt zwischen dem Polymer (den Polymeren) unter b) mindestens 10 °C niedriger als der des Polymers (der Polymere) von Punkt a) ist.

3. Schaumstoff nach Anspruch 1 oder 2, **dadurch gekennzeichnet, dass** er zwischen 15 und 50 % Metallocen-Polyethylen umfasst.

4. Schaumstoff nach einem der vorhergehenden Ansprüche, **dadurch gekennzeichnet, dass** das Metallocen-Polyethylen eine Dichte von weniger als 915 kg/m³ aufweist.

5. Schaumstoff nach einem der vorhergehenden Ansprüche, **dadurch gekennzeichnet, dass** er außerdem 5 bis 85 % Chlorpolyethylen umfasst, das einen Chlorgehalt besitzt, der von 10 bis 60 Gew.-% reicht.

6. Schaumstoff nach Anspruch 5, **dadurch gekennzeichnet, dass** er 10 bis 50 % Chlorpolyethylen und vorzugsweise zwischen 20 und 40 % Chlorpolyethylen umfasst.

7. Schaumstoff nach einem der vorhergehenden Ansprüche, **dadurch gekennzeichnet, dass** er zwischen 0,1 und 10 Gew.-% Keimbildner umfasst.

8. Schaumstoff nach einem der vorhergehenden Ansprüche, **dadurch gekennzeichnet, dass** er außerdem übliche Additive und Hilfsstoffe umfasst, die aus der Gruppe bestehend aus Mitteln zur Steuerung der Maßhaltigkeit, Antistatika, Pigmenten, Antioxidationsmitteln, UV-Schutzmitteln, Gleitmittel, flammhemmenden Mitteln und infrarotreflektierenden/-absorbierenden Mitteln ausgewählt sind.

9. Dichtung, die einen Schaumstoff nach einem der vorhergehenden Ansprüche umfasst.

10. Verfahren zum Verschäumen eines Gemischs von Polymeren nach einem der Ansprüche 1 bis 8, **dadurch gekennzeichnet, dass** das Verfahren die folgenden Schritte umfasst:
a) Dosieren von Bestandteilen, Vorgemischen oder Einzeldosen zur Speisung eines Extruders;
b) Plastifizieren und Mischen der Bestandteile bei hoher Temperatur zum Schmelzen und Homogenisieren der Bestandteile;
c) Injizieren eines Schäumgases;
d) Homogenisieren der Bestandteile und des Gases;
e) Abkühlen der Masse;
f) Extrudieren an der Luft durch eine temperaturgeregelte Düse mit einem Abschnitt mit einer vordefinierten Form, wodurch die Bildung des Schaumstoffs bewirkt wird;
g) Abkühlen, Ziehen und Führen des so gebildeten Schaumstoffs.

11. Verschäumverfahren nach Anspruch 10, **dadurch gekennzeichnet, dass** der Schaumstoff während des Schritts g) zusammengepresst wird.
